(19) Europäisches Patentamt
European Patent Office
Office européen des brevets

(11) **EP 2 438 524 B1**

(12) **EUROPEAN PATENT SPECIFICATION**

(45) Date of publication and mention
of the grant of the patent:
**19.02.2020   Bulletin 2020/08**

(21) Application number: **10783807.0**

(22) Date of filing: **24.05.2010**

(51) Int Cl.:
**G06F 15/16** (2006.01)          **H04L 29/06** (2006.01)
**H04L 29/08** (2006.01)          **G06Q 10/10** (2012.01)
**G06Q 30/02** (2012.01)

(86) International application number:
**PCT/US2010/035972**

(87) International publication number:
**WO 2010/141259 (09.12.2010 Gazette 2010/49)**

(54) **METHOD AND COMPUTER SOFTWARE FOR MATCHING USERS IN MULTI-USER COMPUTER SIMULATIONS**

VERFAHREN UND COMPUTER SOFTWARE ZUR BENUTZERANPASSUNG IN MEHRBENUTZER-COMPUTERSIMULATIONEN

PROCÉDÉ ET LOGICIEL DE MISE EN CORRESPONDANCE D'UTILISATEURS DANS DES SIMULATIONS INFORMATIQUES MULTI-UTILISATEURS

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **01.06.2009   US 183001 P
10.09.2009   US 557376**

(43) Date of publication of application:
**11.04.2012   Bulletin 2012/15**

(73) Proprietor: **Sony Computer Entertainment
America LLC
San Mateo, CA 94404 (US)**

(72) Inventor: **MCENIRY, Christopher Alan
San Mateo, California 94404 (US)**

(74) Representative: **D Young & Co LLP
120 Holborn
London EC1N 2DY (GB)**

(56) References cited:
**EP-A1- 1 570 887          US-A1- 2003 177 187
US-A1- 2006 242 291          US-A1- 2006 287 099**

- **LUKAS BROZOVSKY ET AL: "Recommender
System for Online Dating Service", ARXIV.ORG,
CORNELL UNIVERSITY LIBRARY, 201 OLIN
LIBRARY CORNELL UNIVERSITY ITHACA, NY
14853, 9 March 2007 (2007-03-09), XP080278942,**

## Description

### BACKGROUND OF THE INVENTION

#### 1. Field of the Invention

The present invention relates generally to computer simulations, and more specifically to a process of matching users in multi-user computer simulations.

#### 2. Discussion of the Related Art

A multi-user computer simulation, such as a multi-user computer game, allows more than one user to participate in the simulation. Such multi-user computer simulations are often conducted online so that users in geographically diverse locations can participate. Many multi-user computer simulations involve different teams or clans of users competing against each other.

Previously proposed arrangements are disclosed in EP 1 570 887 A1 and Lukas Brozovsky et al: "Recommender System for Online Dating Service", 201 Olin Library, Cornell University, March 2007.

### SUMMARY OF THE INVENTION

The invention is defined by the appended claims.

A better understanding of the features and advantages of various embodiments of the present invention will be obtained by reference to the following detailed description and accompanying drawings which set forth an illustrative embodiment in which principles of embodiments of the invention are utilized.

### BRIEF DESCRIPTION OF THE DRAWINGS

The above and other aspects, features and advantages of several embodiments of the present invention will be more apparent from the following more particular description thereof, presented in conjunction with the following drawings.

FIG. 1 illustrates the general flow of a method 100 for matching users in a multi-user simulation according to an embodiment of the present invention;

FIG. 2 illustrates a flow diagram of a method 200 for initiating a multi-user session according to some embodiments of the present invention;

FIG. 3 illustrates a flow diagram of a process 300 for evaluating the tag data for the users, according to some embodiments of the present invention;

FIG. 4 illustrates a detail flow diagram of a process 400 for calculating a quotient value Q for one or more specific tags, according to several embodiments of the present invention;

FIG. 5 illustrates one or more exemplary tag data files for users of the multi-user session according to one or more embodiments of the present invention;

FIG. 6 illustrates an exemplary display of a game session where user can enter tags for other users, according to some embodiments of the present invention;

FIG. 7 illustrates a flow diagram of a method 700 for assigning tags to a user according to one or more embodiments of the present invention;

FIG. 8 is a block diagram illustrating a processor-based system that may be used to run, implement and/or execute the methods and/or techniques shown and described herein in accordance with embodiments of the present invention;

FIG. 9 illustrates an exemplary embodiment of an environment within which the methods and apparatuses of the present application are implemented.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present invention. In addition, common but well-understood elements that are useful or necessary in a commercially feasible embodiment are often not depicted in order to facilitate a less obstructed view of these various embodiments of the present invention.

### DETAILED DESCRIPTION

The following description is not to be taken in a limiting sense, but is made merely for the purpose of describing the general principles of exemplary embodiments. The scope of the invention should be determined with reference to the claims.

As mentioned above, many multi-user computer simulations are often conducted online so that users in geographically diverse locations can participate. Many such users may be physically separated from each other by hundreds or even thousands of miles and may not know each other outside of their online "community". As such, it can often be difficult for a user to choose or be matched with other users for purposes of forming a team (or clan) or for finding a user or opposing team to play against.

Embodiments of the present invention provide a method for matching users in multi-user computer simulations, such as a multi-user computer game. The matching may be for purposes of game pairing or forming a team (or clan), or for finding a user or opposing team to play against. In general, some embodiments provide a mechanism whereby an online game user can set folksonomy tags on fellow users. Those tags are then used as a factor in the matchmaking algorithms for game pairing.

For example, in some embodiments a user may enter tags for other players he or she has encountered. The tags may comprise labels that are descriptive of the player and/or his or her behavior. Examples of such tags include, but are not limited to, "good sportsman", "bad sportsman", "sore loser", "cry baby", "whiner", "team player", "ball hog", "show off", "cheater", etc. The game environment then stores the entered tags, such as in a folksonomy database. Because folksonomy is sometimes based on fuzzy, subjective, and hard to correlate items, the folksonomy database or other system may correlate the tags and make statistical decisions as to the "accuracy" of various tags and taggers. For example, in some embodiments, tag data may be evaluated by determining the number of times that a tag has been entered for a given user, and then comparing the number to a predefined threshold to determine whether the tag is statistically accurate. That is, in some embodiments, the satisfaction of such a test indicates that the tag is perceived as, or is believed to be, statistically accurate, and so the tag will be referred to as being statistically accurate. In some embodiments, the tag may be judged based on other criteria to determine whether the tag is perceived as statistically accurate and thus may be referred to as being statistically accurate.

In one or more embodiments, associations may be made between closely related tags that differ by spelling or word usage. Once a threshold of tags has been reached, the user can select for other players during matchmaking based on a value, such as "tag quotient." An example of a tag quotient will be described below. The tag quotient may then be sent to the matchmaking process, which weights it and adds it to all of the other game selection weighted values to calculate the desirability of one or more matches for game play. In this way, folksonomy may be used in some embodiments for player selection in computer simulations, such as computer games.

In the following discussion, embodiments of the present invention are described with respect to a multi-user or multi-player computer game, such as a video game. However, it should be understood that the system and method described herein is capable of being used with any computer simulation and/or media playback system.

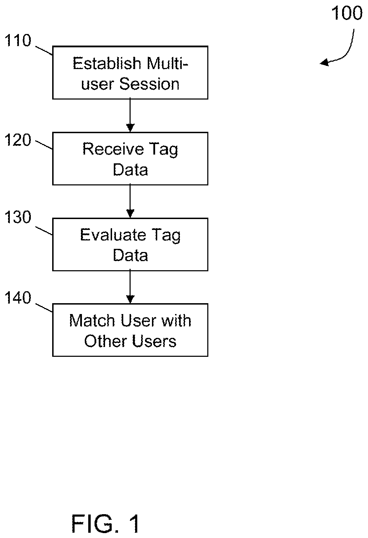

FIG. 1 illustrates the general flow of a method 100 for matching users in a multi-user simulation according to an embodiment of the present invention. The method 100 may be used in a computer simulation, such as a computer game. In step 110, the system establishes a multi-user session. For example, in one embodiment a multi-user computer game session is established. Next in step 120, the system receives tag data for a plurality of users. In some embodiments, the plurality of users for which the system receives tag data comprise all of the users that are present on the game server. In one embodiment, the users for which the system receives tag data are a member of a specific group or team.

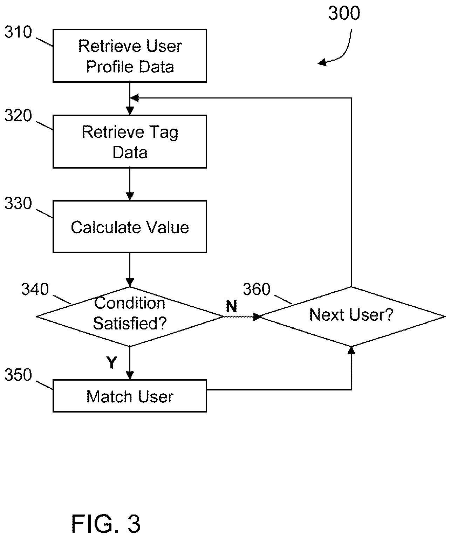

The system then continues to step 130, where the received tag data is evaluated. In some embodiments, in order to evaluate the tag data the system determines the number of times a user has been tagged. For example, the system will retrieve tags entered for a user entered by a plurality of other users and determine all of the tags entered that have the same or similar meaning and determine the number of times the tag has been entered. In another embodiment, the system may determine a value based on the tags entered for one or more users. In one embodiment, the evaluating comprises comparing the tags entered for each user by other users to the preferences of that user. In one embodiment, the tag data is used to determine which users are best fitted to play with each other, and therefore, the evaluating comprises determining a group of users having common characteristics. Evaluating tag data is further described below with respect to FIG. 3.

Next, the system continues to step 140 where a first user is matched with other users based on the result of evaluating performed in step 130. In one embodiment, in step 140 the system matches a plurality of users with one another when this group of users have common characteristics. In some embodiments, these users are then assigned to the multi-user session and play a game. In some embodiments, the user is matched with other users based on the preferences of that user. In one embodiment, the user preferences are stored in a database. In another embodiment, the preferences are entered by the user at the time of the multi user session is initiated using a user input device. In one embodiment, the first user is matched with other users based on the first user's skill level and expertise.

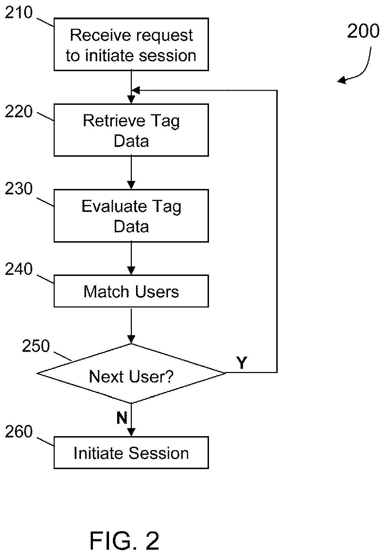

FIG. 2 illustrates a flow diagram of a method 200 for initiating a multi-user session according to some embodiments of the present invention. In step 210, the system receives a request for initiating a multi-user session from a first user. In one embodiment, the request is received when the user asks to join a game. In one embodiment, the user requests to immediately start a session. In another embodiment, the user may request to initiate a game session in a future time. In some embodiments, the system will retrieve user profile data for the user. Next in step 220, the system retrieves tag data for a second user. In one embodiment, the tag data for the second user is stored at a remote database. In an alternative embodiment, the tag data is stored locally at the machine hosting the game server initiating the game session. In some embodiments, the second user is one of a plurality of users on the game server. In some embodiments, the tag data may include tags assigned to the one or more users. In some embodiments, the second user for which the system receives tag data is one of the users subscribed to the game server. In one embodiment, the second user is a member of a specific group or team. In one embodiment, for example, the second user is one of the users available to join the session at the time specified by the first user. In some embodiments, the time specified by the user may correspond to the present time, while in other embodiments the user may specify a future time at which the user wishes to initiate the session.

The process 200 then continues to step 230 where the system evaluates the tag data for the second user. In one embodiment, the process first determines the number of times that each tag has been assigned to the second user. In one embodiment this information is available as part of the tag data while in other embodiments the system may analyze the tag data to find all of the tags. The system may analyze the tags to find all tags that are variations of the same word, or have similar meaning and treat those tags as being the same tag when determining the number of times the tag is used. In some embodiments, during this step the system further calculates a value based on the tag data. In one embodiment, for example, the value corresponds to the first user's perspective of the second user. In another embodiment, the value corresponds to the second user's overall reputation within the community. In yet another embodiment, the value may correspond to the perspective of a specific clan or group of users within the community. For example, in one embodiment the first user may belong to one or more groups and values corresponding to the overall reputation of the second user's reputation according to one or more of these groups or clans. In one or more embodiments, the calculated value corresponds to the quotient representing the reputation of the second user according to the user, overall community and/or one or more teams or clans.

Furthermore, in step 230 the system may compare the results of evaluating the tag data with one or more conditions. In one embodiment for example, the value calculated may be compared to one or more conditions specified by the first user. In one embodiment, for example, the conditions may be predefined by the user. In another embodiment, the user may input the condition using an input device such as a mouse, keyboard, game controller, etc. For example, in some embodiments, in step 210 when the user requests to initiate a session, the game server may prompt the user to enter one or more conditions. In other embodiments, the condition may be defined by the system. Further, in some embodiments, the conditions may be a community-defined condition. In another embodiment, the condition may be defined according to a clan or group that a user belongs to or affiliates with. The conditions may be stored locally at the central server, or stored at a remote location. The process for evaluating data is described in further detail below with respect to FIG. 3.

Next, in step 240 the first user and the second user are matched according to the evaluation of the tag data in the previous step. For example, in one embodiment the first and the second user are matched if it is determined that a certain condition is met in the previous step. The process then moves to step 250 when it is determined whether the system wishes to continue finding other users to be matched with the first user. If it is determined that the system will continue to look for more users, the process returns to step 220 where tag data is retrieved for the next user. This process is repeated, until the system determines in step 250 that the system has finished looking for users to be matched with the first user the process moves to step 260 and the session is initiated with all of the users that were matched with the first user in step 240 being included in the step. For example, in some embodiments, the system moves to step 260 when it determines that no more users remain or that enough users have been allocated to the session. Alternatively, the session may be initiated at or after step 210 when the user requests to initiate the session and the users may be assigned to the session one by one.

In one embodiment, the number of users that the system evaluates is equal to the number of users that are logged on to the server at the time the system receives the request and are available to join a session at that time. In another embodiment, where the user request a session to be started ahead of time all users subscribed to the server may be considered and invitations can be sent out to users to log on at that specific time to start the session. In one embodiment, step 250 ends when all users eligible have been reviewed. In another embodiment, step 250 may be terminated as soon as enough users are matched to the game. In an alternative embodiment, the system may wait to match users until all users have been evaluated and determine which of the users would be the best fit for the first user.

FIG. 3 illustrates a flow diagram of a process 300 for evaluating the tag data for the users, according to some embodiments of the present invention. In step 310 user profile, data is retrieved for a first user. In some embodiments, the user profile data may be predefined and stored locally, or at a remote location. Additionally and/or alternatively, the user may be prompted for such data once the user requests to initiate or join a session, and the user may enter such information using the user input device. In one embodiment, the first user is the user requesting to initiate a multi-user session in step 210 of FIG. 2. In one or more embodiments, the user profile includes information regarding the user. For example, the user profile data may include the preferences of the user, such as the type of users the user prefers to have on his team, the type of users that the user wishes to play against, a list of users that the user does not wish to be associated with, etc.

In a further embodiment, the user profile also comprises tag data for that user. In one embodiment, the tag data included in the user profile data is similar to the tag data retrieved for the users in step 220. In one embodiment, the user profile data further includes weighing factor values that may be used to match the user to other users subscribed to the game server. For example, in one embodiment the user profile data includes weighing factors for both the user and the entire community. In another embodiment, the user profile data includes weighing factors for a clan or group. For example, the profile data includes a weighing factor for clans or groups that the first user belongs to is affiliated with. In some embodiments, the weighing factors correspond to the weight the user has assigned to the tags entered by the user himself and by the community.

In an exemplary embodiment for example, the user profile data includes weighing factors $w_U$ and $w_E$ corresponding to the weight the user wishes to contribute to how the user and the community view other users, respectively. Additionally or alternatively, the user profile data may include weighing factor Wc corresponding to the weight the user wishes to contribute to how a group or clan that he user is affiliated with views others users. In other embodiments, the user profile data may include a white list of other users that the first user wishes to be associated with. The user profile may also include a block list of other users that the first user does not wish to associate with. In some embodiments, the user profile data may be stored at the central server or the processor performing the steps of process 300. In other embodiments, the user profile data may be stored at a remote database.

In step 320, the process continues by retrieving tag data for a second user. In some embodiments, the second user is one of a plurality of users who are subscribed to a game server. In another embodiment, the user is one or of a number of users included in a white list of users that the first user wishes to be associated with. In yet another embodiment, the user may be one of a number of users that is logged on the game server or is available to log on at the time the first user has requested to initiate the game session. In one embodiment, the tag data includes tags that have been entered for the user by other users including the first user. For example, in some embodiments, the tag data is simply a list of tags that have been assigned to the user. In a further embodiment, the tag data may include further information regarding the tags.

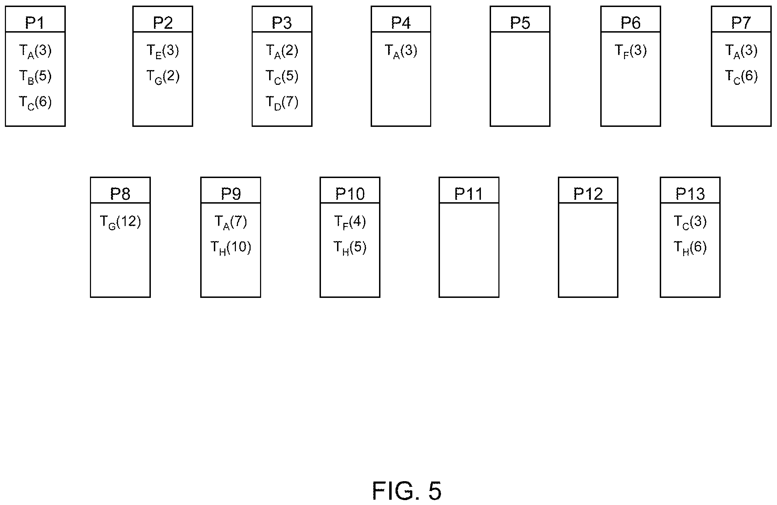

For example, the tag data may include the identity of each person that has entered a tag for the user along with the tags. In another embodiment, the tag data comprises the number of times that a certain tag has been entered for that user. Further information such as the time the tag was entered, the identity of users who entered the tags, the context in which the tag was entered, such as whether the tagged user won or lost the game, whether the tag is entered by a user observing or playing the game with the tagged user, etc., may also be included with the tag data. In one embodiment, the tag data for one or more users is stored locally at a central server. In some embodiments, the tag data for a plurality of users is stored at one or more remote databases. An example of tag data for a plurality of users P1-P13 is illustrated in FIG. 5 according to one embodiment. The tag data is shown as separate files stored within a database, wherein each tag file includes tags entered for each of the users P1-P13.

In one embodiment, P13 corresponds to the user requesting to initiate a game session. As illustrated in FIG. 5, tag data is stored for each of the users. For example, User P1 has been tagged three times with tag A, five times with tag B, and six times with tag C. In one embodiment, for example, each tag, e.g., tags A through H, correspond to a specific characteristic that can be assigned to a user. In some embodiments, tags may be from different categories, such as the attitude of the player, class of play, styles of play, expertise, etc. In some embodiments, for example possible tags may include terms describing the attitude of player, such as Good sportsman, Bad sportsman/sore loser, Griefer, Cry baby, Whiner, Team player, Ball hog, Show off, Croucher, Cheater, Sniper, etc. In additional embodiments, the tags may include terms describing the class of play for different users, such as Demolition, Melee, Heavy Guns, Brute Force, Mage, etc. In some embodiments, the tags may also include terms describing styles of play of different users such as Support, Defense, Leader, Guard, etc.

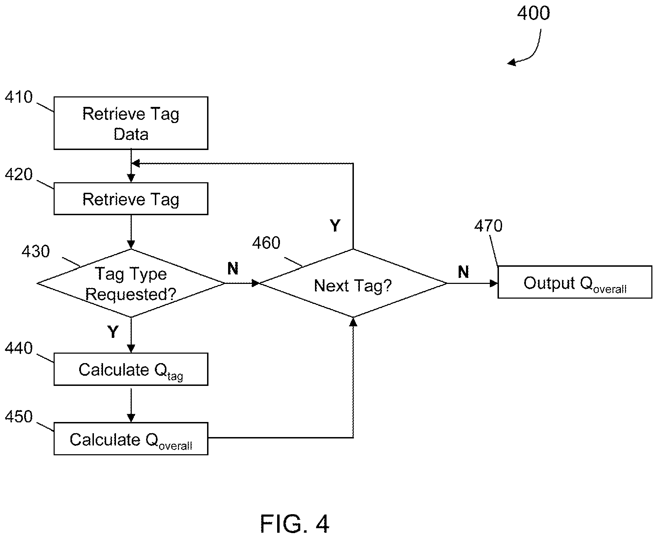

Next in step 330, the data retrieved in steps 310 and 320 is used to calculate a value. In one embodiment, the value is the number of times that each tag has been assigned to a user. In one embodiment, this includes all tags that have synonymous meaning or belong to the same category. In some embodiments, the value corresponds to or comprises a quotient that represents the first user's perspective of the second user. In another embodiment, the value corresponds to a quotient that represents the second user's overall reputation within the community. In yet another embodiment, the value corresponds to or comprises a quotient that represents the second user's overall reputation within a group or clan that the first user belongs to or is affiliated with. In one embodiment, several different game selection values including quotient values may be calculated and combined to calculate the desirability of that match for game play. The method for calculating one example of such quotient value is described in further detail below with respect to FIG. 4.

Next in step 340, the system determines whether the calculated value satisfies one or more conditions. In one embodiment for example, the value calculated may be compared to one or more conditions specified by the user. In one embodiment, for example, the conditions may be retrieved as part of the user profile data during step 310. In another embodiment, the user may input the condition using an input device such as a mouse, keyboard, game controller, etc. In other embodiments, the condition may be defined by the system. Further, in some embodiments, the conditions may be a community-defined condition stored locally at the central server, or stored at a remote location.

If it is determined in step 340 that the one or more conditions are satisfied, the process moves to step 350 where the first user and the second user are matched according to the evaluation of the tag data in the previous step. After matching the users, or if alternatively, in step 340 it is determined that the condition is not satisfied the process continues to step 360 where it is determined whether the system wishes to continue finding matches for the first user. If it is determined that the system will continue to look for more users, the process returns to step 320 where tag data is retrieved for the next user. This process is repeated, until the system determines in step 360 that no more users remain or that enough users have been allocated to the session. In one embodiment, the number of users that are considered is equal to the number of users that are logged on to the server at the time the system receives the request and are available to join a session at that time. In another embodiment, where the user request a session to be started ahead of time all users subscribed to the server may be considered and invitations can be sent out to users to log on at some specific time to start the session. In yet another embodiment, only a subset of users may be considered. For example in one embodiment, users satisfying certain criteria, e.g., game mode, user level, etc., may be considered. In one embodiment, process 300 is terminated when all users eligible have been reviewed. In another embodiment, process 300 may be terminated as soon as enough users are matched to a particular session. In another embodiment, the process 300 may not be terminated when enough users have been assigned, and may consider all of the eligible users to determine the best matches. In yet another embodiment, the process 300 may terminate when enough users having a certain rating of optimal match have been assigned.

FIG. 4 illustrates a detail flow diagram of a process 400 for calculating a quotient value Q for one or more specific tags, according to several embodiments of the present invention. In step 410 tag data for a potential user that may be matched with the user requesting to initiate the session is received. As described above, in one or more embodiments the tag data comprises one or more different tags entered by one or more other users for the user. The process then continues to step 420 where the first tag is retrieved. In one embodiment, during step 420 the tag data for the user is used to calculate the number of times a certain tag has been entered for the user. In one embodiment, this step includes grouping similar tags, including those entries that are misspelled, abbreviated, have same or similar meanings and/or those words that have the same significance according to community defined standards, etc. In one embodiment, the system may look up the one or more tags in a glossary of terms to determine if the tags are to be grouped with some other tags. Associations between tags may be established based on user defined, group defined or community defined standards. In another embodiment, the steps of counting the number of times a tag has been entered or the grouping of the tags is performed in advance and the tag data retrieved is ready for being used.

In some embodiments, the user may request matching based on certain characteristics or the system may perform matching based on specific characteristics of users. For example, in one embodiment the user may wish to assemble a team with players having certain characteristics, skills and/or types, e.g., defender, sniper, etc. In another embodiment, the user may wish to play against users with certain characteristics, skills and/or types, e.g., defender, sniper, etc. In such embodiments, in step 430, the system will determine if the tag retrieved is of the type requested by the user or desired by the system. For example, in one embodiment, the user may wish to play with users that are good defenders, in such embodiment, the system will look to see that tags related to users which are good defenders is analyzed in matching the user with other users. In such embodiments, if in step 430 the system determines that the tag is of the type requested it continues to step 440 where $Q_{tag}$ is calculated for the tag. Otherwise, if it is determined that the tag is not of the type requested, the process continues to step 460 where it is determined if other tags are available for the user. In some embodiments, where no specific characteristics are specified, process 400 may skip step 430 continue onto step 440 after retrieving the tags in step 420.

Next, in step 440, the Quotient value Q for the first tag or group of tags is calculated. In one embodiment, at the time of calculating the quotient the system accesses weighing factor values. In one embodiment, as described above with respect to FIG. 3, the weighing factors may be retrieved as part of the retrieved user profile data. In another embodiment, the user using a user input device such as a mouse, keyboard, game controller, etc. enters the weighing factor values at some time during the process of initiating a session. For example, in some embodiments, when the user requests to initiate a session, the user may be prompted with a message requesting weighing factor values for this specific session. In one embodiment, the weighing factors are stored locally. In other embodiments, the critical mass values are stored at one or more remote databases. In some embodiments, the quotient value Q is calculated according to the equation:

$$Q = \sum_T w_U \bullet U_T + w_E \bullet E_T$$

where T is the selected tag label(s), w is the weighting factor, U indicates whether a user has tagged the potential player, and E indicates the public ("Everyone's") overall tag on the player. In some embodiments, the equation may include additional terms. For example, in some embodiments, the user may have indicated a strong preference for the reputation of users according to all or certain groups that user is a member of or is affiliated with. As such, the equation may further include $w_C$ and $C_T$. In one embodiment, these terms may be included for each group or may be an overall calculation of the reputation of a user according to all the groups selected by the user.

In one embodiment, one or both $U_T$ and $E_T$ have a value of 0 or 1, where 1 indicates that the public has entered the selected tag or tags for the potential user, and 0 indicates that the potential user has not received that particular tag from the public, user and/or different groups or clans. In one embodiment, the value is 1 after a certain number of users have tagged the potential user with that particular tag. The threshold number can be entered by the user requesting to initiate the session through a user input device, or can be retrieved as the part of the user profile of that user. In another embodiment, this number may be determined by the system and stored locally at the machine, or at a remote database. In another embodiment, one or both the $U_T$ and $E_T$ are percentage values. In one embodiment, the percentage value of $U_T$ and $E_T$ represents the number of times the tag has been entered by the user or the public respectively. For example, if a tag is entered 25 times, the value may equal .25. As described above with respect to FIG. 3, in various embodiments weighing factors $w_E$, $w_U$ and/or other weighing factors may be retrieved as part of the user profile data of the user requesting to initiate the session, entered by the user through a user input device, defined by the system, or user, group or community defined values. Furthermore, the value may be stored locally at the machine performing the calculations according to one or more of the above embodiments, or stored at a remote storage location.

After calculating the Q for the particular tag, the process then moves to step 450 where the $Q_{tag}$ corresponding to the Q value for the tag is added to the overall sum of all Q values for all tags being considered. Next, the system determines whether there are other tags retrieved with the tag data of the potential user that a $Q_{tag}$ value has not been calculated for. If it is determined that other tags are available for the user, then the process returns to step 420 where the next tag is retrieved. Alternatively, if it is determined in step 460 that no other tags exist for the potential user, the system outputs $Q_{overall}$ corresponding to the overall sum of all $Q_{tag}$ values for all tags considered. In one embodiment, this quotient is then sent to the matchmaking process, which weights it and adds it to all of the other game selection weighted values to calculate the desirability of that match for game play.

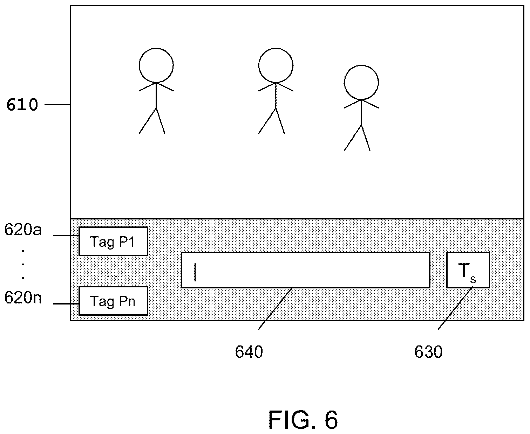

Tags may be entered by users during a game session. FIG. 6 illustrates an exemplary display of a game session where user can enter tags for other users, according to some embodiments of the present invention. The screen comprises a display area 610 displaying the game. The screen may further comprise tag fields 620a to 620n for each of the users in the game. In one embodiment, instead of buttons the screen may comprise a text field where a user wishing to tag another user can enter the name of that user. In another embodiment, the tagger may select the name of the user he or she wishes to tag from a drop down list. Next, the user can enter a tag for the selected user in the tag field 640. In one embodiment, the tag field is a text field where the user can enter a tag. In one embodiment, the tag field may have an auto fill option, as well as spell check, synonyms and other text options. In an alternative embodiment, the screen can have a tag lookup button 630. In one embodiment, when a user selects the lookup button a list of tags may appear from which the user can choose one or more tags to enter. In one embodiment, the tag field may be a drop down menu from which the user can select one or more tags. In one embodiment, tags may be entered by other users playing a game with the user. In other embodiments, tags may be entered by all users observing the game even if they are not one of the players.

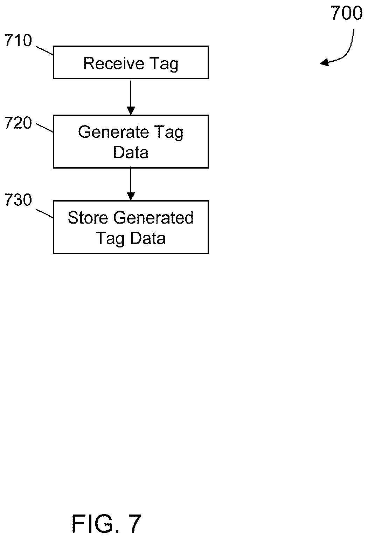

FIG. 7 illustrates a flow diagram of a method 700 for assigning tags to a user according to one or more embodiments of the present invention. After one or a plurality of users enters a tag for the user, the tag is received in step 710 by the system. In one embodiment, all users subscribed to the game server and/or observing or playing games with one or more other users can enter tags. In some embodiments, the system may restrict tagging rights for one or more users. For example, in one embodiment, only the users registered can tag other users. In another embodiment, certain users who are determined to be abusive or unreliable taggers may not be allowed to tag or their tags may not be considered and/or stored.

For example, in one embodiment, a user may be reported by other users as being an abusive tagger. In another embodiment, a user may be unauthorized to enter tags for a certain user or group of users if those users have indicated that they do not wish to be tagged by that user. In some embodiments, In step 710 the system may optionally check to see whether the user entering the tag is one of the users authorized to enter a tag. If the system determines the user is not authorized the system may output a message notifying the user or may alternatively just ignore the tag. For example, in one embodiment if it is determined that a user is not authorized to enter tags the system may notify the user and give the user the option to register at the game server.

The system then proceeds to step 720 and generates tag data corresponding to the received tag. In one embodiment, the generated tag data may simply be the entered tag. In another embodiment, the tag data may comprise further information. For example, in some embodiments, the tag data may comprise an identity of the tagger and/or the context in which the tag was entered. In another embodiment, in step 720 the system may perform a process to categorize the tag into one or more categories. The system may also correlate these tags - making statistical decisions as to the "accuracy" of various tags and taggers; and making associations between closely related tags that differ by spelling or word usage. For example, in one embodiment, after the tag is received in step 720 the system may search for synonyms of the tag entered that are more widely used or enforced as a community standard and use the synonym as the identifier for the tag.

In a further embodiment, the tagger may be prompted with a message to verify that the synonym used for the entered tag is in fact what the user meant by the tag. In other embodiments, spelling of the tags may be verified, the format of the tag may be changed, etc. After tag data is generated, the system then proceeds to store the tag data for the tagged user. The tag data may be stored locally at the machine executing the process 700, or alternatively, may be stored at a remote storage location for later retrieval. In one exemplary embodiment, the system may store the tags in a folksonomy database for later retrieval. In one embodiment, the tags may be correlated after or right before being stored into the database. In one embodiment, once a threshold of tags has been reached, the user can select for other players during matchmaking according to the methods described above.

In addition to or instead of being used for tagging, in some embodiments tags may also be used by the system for other purposes. For example, in some embodiments, tags may be used for load balancing. In some embodiments, the system may match the users with different skill or expertise by limiting the functionality or availability based on their skill. In some embodiments, for example, the system may load balance based on tags entered for the users. For example, in one embodiment, by analyzing the tags entered by the user the system can determine the areas in which that user is more proficient in the game and may remove some of the capabilities of that user to balance the load of the game session. In one embodiment, for example, the system can speed up the matching system by creating a balanced game by limiting the capabilities of the users.

In some embodiments, tags may be used for data mining. For example, in some embodiments, tag data may be used to determine what type of people play the game for advertising or other purposes. In some embodiments, mining based on tags may be useful in creating marketing data for the game, or targeting advertisements to the users of certain games. Mining may also be performed for cheat detection, and cheat correlation.

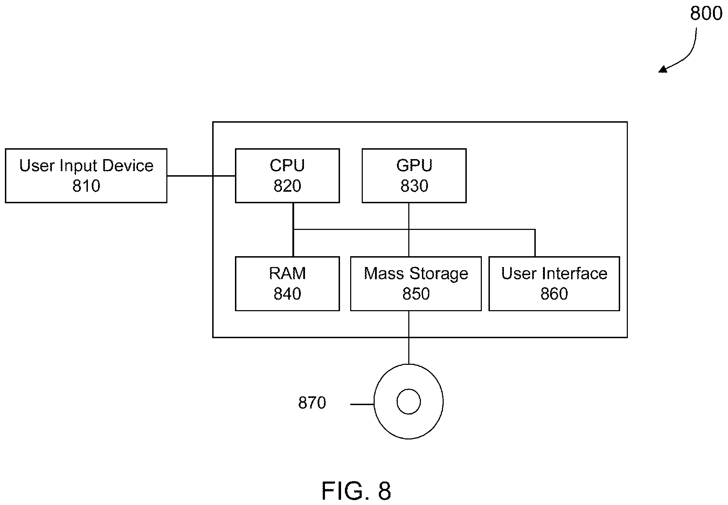

The methods and techniques described herein may be utilized, implemented and/or run on many different types of systems. Referring to FIG. 8, there is illustrated a system 800 that may be used for any such implementations. One or more components of the system 800 may be used for implementing any system or device mentioned above, such as for example any of the above-mentioned consoles, game consoles, entertainment systems, processor based systems, etc. However, the use of the system 800 or any portion thereof is certainly not required.

By way of example, the system 800 may comprise a Central Processing Unit (CPU) 820, a Graphic Processing Unit (GPU) 830, a Random Access Memory (RAM) 840, a mass storage 850, such as a disk drive, and a user interface 860 such as a display. The CPU 820 and/or GPU 830 may be used to execute or assist in executing the steps of the methods and techniques described herein, and various program content, images, games, simulations, representations, communities, interfaces, etc. may be rendered on the user interface 860. The system 800 may further comprise a user input device 810. The user input device may comprise any user input device such a keyboard, mouse, game controller, etc. The system 800 comprises an example of a processor-based system.

The mass storage unit 850 may include or comprise any type of computer readable storage or recording medium or media. The computer readable storage or recording medium or media may be fixed in the mass storage unit 850, or the mass storage unit 850 may optionally include removable storage media 870, such as a digital video disk (DVD), Blu-ray disc, compact disk (CD), USB storage device, floppy disk, or other media. By way of example, the mass storage unit 850 may comprise a disk drive, a hard disk drive, flash memory device, USB storage device, Blu-ray disc drive, DVD drive, CD drive, floppy disk drive, etc. The mass storage unit 850 or removable storage media 870 may be used for storing code that implements the methods and techniques described herein.

Thus, removable storage media 870 may optionally be used with the mass storage unit 850, which may be used for storing code that implements the methods and techniques described herein, such as code for generating and storing the tag data described above, performing the initiation of a session, evaluating, and matching of the users. However, any of the storage devices, such as the RAM 840 or mass storage unit 850, may be used for storing such code. For example, any of such storage devices may serve as a tangible computer storage medium for embodying a computer program for causing a console, system, computer, or other processor based system to execute or perform the steps of any of the methods, code, and/or techniques described herein. Furthermore, any of the storage devices, such as the RAM 840 or mass storage unit 850, may be used for storing any needed database(s).

In some embodiments, one or more of the embodiments, methods, approaches, and/or techniques described above may be implemented in a computer program executable by a processor-based system. By way of example, such processor based system may comprise the processor based system 800, or a computer, entertainment system, game console, graphics workstation, etc. Such computer program may be used for executing various steps and/or features of the above-described methods and/or techniques. That is, the computer program may be adapted to cause or configure a processor-based system to execute and achieve the functions described above. For example, such computer program may be used for implementing any embodiment of the above-described steps or techniques for generating tag data and matching players based on the tag data, etc. As another example, such computer program may be used for implementing any type of tool or similar utility that uses any one or more of the above described embodiments, methods, approaches, and/or techniques. In some embodiments, the computer program may comprise a video game, role-playing game (RPG), or other computer simulation. In some embodiments, program code modules, loops, subroutines, etc., within the computer program may be used for executing various steps and/or features of the above-described methods and/or techniques. In some embodiments, the computer program may be stored or embodied on a computer readable storage or recording medium or media, such as any of the computer readable storage or recording medium or media described herein.

Therefore, in some embodiments the present invention provides a computer program product comprising a medium for embodying a computer program for input to a computer and a computer program embodied in the medium for causing the computer to perform or execute steps comprising any one or more of the steps involved in any one or more of the embodiments, methods, approaches, and/or techniques described herein. For example, in some embodiments the present invention provides a computer-readable storage medium storing a computer program for use with a computer simulation, the computer program adapted to cause a processor based system to execute steps comprising: running a multi-user computer simulation having an ability for any user in a plurality of users to enter tags for any other user in the plurality of users, receiving tag data for the plurality of users, wherein the tag data includes any tags that have been entered for any of the users in the plurality of users, evaluating the tag data and matching a first user in the plurality of users with one or more of the other users in the plurality of users based on a result of the evaluating.

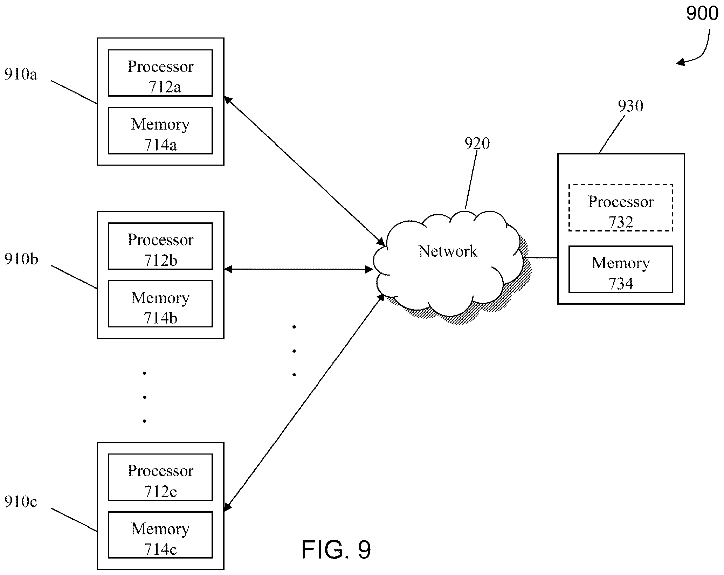

FIG. 9 illustrates an exemplary embodiment of an environment within which the methods and apparatuses of the present application are implemented, for example, in a multiplayer game. The system 900 includes a plurality of local devices 910a, 910b, 910c, a sever device 930, and a network 920. The network 920 couples the local devices 910a, 910b, 910c, to each other and to the server 930. The plurality of local devices 910a, 910b, 910c, are each respectively configured to include a processor 712a, 712b, 712c, coupled to a memory 714a, 714b, 714c, such as random access memory. The server device 930 also includes a processor 732 coupled to a memory 734. In some embodiments the memory 734 may be coupled to or comprise a computer-readable medium. In one embodiment, the processors 712a, 712b, 712c, and/or 732 execute program instructions stored in the computer-readable medium. In some embodiments, the memory 734 may be coupled to one or more additional external or internal devices, such as, without limitation, a secondary data storage element, such as a database. In an alternate embodiment, the memory 734 may serve as a database for storing replay and/or metadata as described above. In some embodiments one or more of the local devices 910a, 910b, 910c and the server device 930 are similar to the processor based system 800 according to FIG. 8 described above.

Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

Furthermore, the described features, structures, or characteristics of the invention may be combined in any suitable manner in one or more embodiments. In the following description, numerous specific details are provided, such as examples of programming, software modules, user selections, network transactions, database queries, database structures, hardware modules etc., to provide a thorough understanding of embodiments of the invention. One skilled in the relevant art will recognize, however, that the invention can be practiced without one or more of the specific details, or with other methods, components, materials, and so forth. In other instances, well-known structures, materials, or operations are not shown or described in detail to avoid obscuring aspects of the invention.

While the invention herein disclosed has been described by means of specific embodiments, examples and applications thereof, numerous modifications and variations could be made thereto by those skilled in the art without departing from the scope of the invention set forth in the claims.

## Claims

1. A method for use in a computer simulation comprising:

    receiving a request from a first user to initiate (210) a multi-user session;
    retrieving (220) tag data for a second user, wherein the tag data comprises tags that are descriptive of the second user entered by one or more users of a plurality of users including the first user;
    evaluating (230) the tag data;
    matching (240) the first user with the second user based on the result of the evaluating; and
    initiating the multi-user session with at least the first user and second user;

wherein evaluating the tag data of the second user comprises:

for each tag descriptive of the second user in the tag data, determining whether the first user entered the tag for the second user; and

weighting any tags determined to be entered by the first user for the second user by a first weighting factor among the tags descriptive of the second user entered by one or more users of the plurality of users.

2. The method of claim 1, further comprising:
retrieving profile data (310) for the first user, wherein the evaluating the tag data is based at least in part upon the profile data.

3. The method of claim 2, wherein the evaluating the tag data comprises:
calculating (330) at least one value based upon the profile data of the first user and the tag data of the second user.

4. The method of claim 3, wherein the matching comprises:
matching (350) the first user and the second user based upon the calculated value.

5. The method of claim 3, wherein the matching further comprises:
determining whether the calculated value satisfies a predefined condition and matching the first user and the second user when the predetermined condition is satisfied.

6. The method of claim 5, wherein the predefined condition is satisfied when the calculated value exceeds a predefined threshold value defined by the first user and retrieved from the profile data.

7. The method according to any one of claim 2-6, wherein the profile data of the first user comprises tag data for the first user, wherein the tag data corresponds to tags entered by the plurality of users.

8. The method according to any one of claims 1-6, further comprising:
grouping the tag data into one or more tag categories wherein the evaluating the tag data comprises evaluating the tag data of one or more of the tag categories.

9. The method of claim 8, wherein the one or more tag categories each comprise one or more tag data each representing a tag, wherein the tags represented in the tag category defines a certain user characteristic.

10. The method of according to any one claims 1-6, wherein evaluating the tag data comprises:

determining a number of times that a tag has been entered for the second user; and comparing the number of times to a predefined threshold to determine whether the tag is statistically accurate.

11. The method according to any one of claims 1-6 further comprising:

receiving a tag regarding the first user or the second user during the multi-user session, wherein the tag is entered by the first user, the second user or another user of the plurality of users;
generating tag data corresponding to the tag, wherein the tag data comprises at least the tag and the identity of the user who entered the tag; and
storing the tag data.

12. The method according to any one of claims 1-6 further comprising:

retrieving tag data for a third user, wherein the tag data comprises tags entered by one or more users of a plurality of users including the first user and the second user;
evaluating the tag data for the third user;
matching the first user with the third user based on the result of the evaluating; and
adding the third user to the multi-user session.

13. The method of any one of claims 1 to 12, wherein:
the evaluating the tag data comprises:

determining a type of each of the tags that have been entered; and
determining a number of each type of tag that has been entered; and
the matching comprises matching based on the number of each type of tag that has been entered.

14. Computer software which, when executed by a computer, is operable to carry out a method according to any one of claims 1 to 13.

**Patentansprüche**

1. Verfahren zur Verwendung in einer Computersimulation, umfassend:

Empfangen einer Anforderung von einem ersten Benutzer, eine Mehrbenutzersitzung einzuleiten (210);

Abrufen (220) von Tag-Daten für einen zweiten Benutzer, wobei die Tag-Daten Tags umfassen, die den zweiten Benutzer beschreiben, die durch einen oder mehrere Benutzer einer Vielzahl von Benutzern, die den ersten Benutzer umfasst, eingegeben werden;

Auswerten (230) der Tag-Daten;

Abstimmen (240) des ersten Benutzers mit dem zweiten Benutzer auf der Basis des Ergebnisses der Auswertung; und

Einleiten der Mehrbenutzersitzung mit mindestens dem ersten Benutzer und zweiten Benutzer;

wobei Auswerten der Tag-Daten des zweiten Benutzers Folgendes umfasst:

    für jedes Tag, das den zweiten Benutzer in den Tag-Daten beschreibt, Bestimmen, ob der erste Benutzer das Tag für den zweiten Benutzer eingegeben hat; und

    Gewichten aller Tags, von denen bestimmt wird, dass sie durch den ersten Benutzer für den zweiten Benutzer eingegeben werden, mit einem ersten Gewichtungsfaktor unter den Tags, die den zweiten Benutzer beschreiben, die durch einen oder mehrere Benutzer der Vielzahl von Benutzern eingegeben wurden.

2. Verfahren nach Anspruch 1, ferner umfassend:
Abrufen von Profildaten (310) für den ersten Benutzer, wobei das Auswerten der Tag-Daten mindestens teilweise auf den Profildaten basiert.

3. Verfahren nach Anspruch 2, wobei das Auswerten der Tag-Daten Folgendes umfasst:
Berechnen (330) mindestens eines Werts auf der Basis der Profildaten des ersten Benutzers und der Tag-Daten des zweiten Benutzers.

4. Verfahren nach Anspruch 3, wobei das Abstimmen Folgendes umfasst:
Abstimmen (350) des ersten Benutzers und des zweiten Benutzers auf der Basis des berechneten Werts.

5. Verfahren nach Anspruch 3, wobei das Abstimmen ferner Folgendes umfasst:
Bestimmen, ob der berechnete Wert eine vordefinierte Bedingung erfüllt, und Abstimmen des ersten Benutzers und des zweiten Benutzers, wenn die vorbestimmte Bedingung erfüllt ist.

6. Verfahren nach Anspruch 5, wobei die vordefinierte Bedingung erfüllt ist, wenn der berechnete Wert einen vordefinierten Schwellenwert überschreitet, der durch den ersten Benutzer definiert und aus den Profildaten abgerufen wird.

7. Verfahren nach einem der Ansprüche 2-6, wobei die Profildaten des ersten Benutzers Tag-Daten für den ersten Benutzer umfassen, wobei die Tag-Daten durch die Vielzahl von Benutzern eingegebenen Tags entsprechen.

8. Verfahren nach einem der Ansprüche 1-6, ferner umfassend:
Gruppieren der Tag-Daten zu einer oder mehreren Tag-Kategorien, wobei das Auswerten der Tag-Daten Auswerten der Tag-Daten einer oder mehrerer der Tag-Kategorien umfasst.

9. Verfahren nach Anspruch 8, wobei die eine oder mehreren Tag-Kategorien jeweils ein oder mehrere Tag-Daten umfassen, die jeweils ein Tag repräsentieren, wobei die in der Tag-Kategorie repräsentierten Tags eine bestimmte Benutzereigenschaft definieren.

10. Verfahren nach einem der Ansprüche 1-6, wobei Auswerten der Tag-Daten Folgendes umfasst:

    Bestimmen einer Anzahl von Malen, wie oft ein Tag für den zweiten Benutzer eingegeben wurde; und

    Vergleichen der Anzahl von Malen mit einer vordefinierten Schwelle, um zu bestimmen, ob das Tag statistisch genau ist.

11. Verfahren nach einem der Ansprüche 1-6, ferner umfassend:

    Empfangen eines Tags hinsichtlich des ersten Benutzers oder des zweiten Benutzers während der Mehrbenutzersitzung, wobei das Tag durch den ersten Benutzer, den zweiten Benutzer oder einen anderen Benutzer der Vielzahl von Benutzern eingegeben wird;

    Erzeugen von Tag-Daten, die dem Tag entsprechen, wobei die Tag-Daten mindestens das Tag und die Identität des Benutzers, der das Tag eingegeben hat, umfassen; und

    Speichern der Tag-Daten.

12. Verfahren nach einem der Ansprüche 1-6, ferner umfassend:

    Abrufen von Tag-Daten für einen dritten Benutzer, wobei die Tag-Daten Tags umfassen, die durch einen oder mehrere Benutzer einer Vielzahl von Benutzern, die den ersten Benutzer und den zweiten Benutzer umfasst, eingegeben werden;

    Auswerten der Tag-Daten für den dritten Benutzer;

Abstimmen des ersten Benutzers mit dem dritten Benutzer auf der Basis des Ergebnisses der Auswertung; und

Hinzufügen des dritten Benutzers zu der Mehrbenutzersitzung.

13. Verfahren nach einem der Ansprüche 1 bis 12, wobei das Auswerten der Tag-Daten Folgendes umfasst:

Bestimmen eines Typs jedes der Tags, die eingegeben wurden; und

Bestimmen einer Anzahl jedes Typs von Tag, das eingegeben wurde; und

das Abstimmen Abstimmen auf der Basis der Anzahl jedes Typs von Tag, das eingegeben wurde, umfasst.

14. Computersoftware, die, wenn sie durch einen Computer ausgeführt wird, betreibbar ist zum Ausführen eines Verfahrens nach einem der Ansprüche 1 bis 13.

**Revendications**

1. Procédé destiné à être utilisé dans une simulation informatique, comprenant les étapes consistant à :

recevoir une demande provenant d'un premier utilisateur pour lancer (210) une session multi-utilisateur ;

récupérer (220) des données d'étiquette pour un deuxième utilisateur, les données d'étiquette comprenant des étiquettes qui décrivent le deuxième utilisateur, entrées par un ou plusieurs utilisateurs d'une pluralité d'utilisateurs comprenant le premier utilisateur ;

évaluer (230) les données d'étiquette ;

mettre en correspondance (240) le premier utilisateur avec le deuxième utilisateur d'après le résultat de l'évaluation ; et

lancer la session multi-utilisateur avec au moins le premier utilisateur et le deuxième utilisateur ;

dans lequel l'évaluation des données d'étiquette du deuxième utilisateur comprend les étapes consistant à :

pour chaque étiquette qui décrit le deuxième utilisateur dans les données d'étiquette, déterminer si le premier utilisateur a entré l'étiquette pour le deuxième utilisateur ; et pondérer toute étiquette pour laquelle il a été déterminé qu'elle a été entrée par le premier utilisateur pour le deuxième utilisateur avec un premier facteur de pondération, parmi les étiquettes qui décrivent le deuxième utilisateur et qui ont été entrées par un ou plusieurs utilisateurs de la pluralité d'utilisateurs.

2. Procédé selon la revendication 1, comprenant également l'étape consistant à :
récupérer des données de profil (310) pour le premier utilisateur, l'évaluation des données d'étiquette reposant, au moins en partie, sur les données de profil.

3. Procédé selon la revendication 2, dans lequel l'évaluation des données d'étiquette comprend l'étape consistant à :
calculer (330) au moins une valeur basée sur les données de profil du premier utilisateur et les données d'étiquette du deuxième utilisateur.

4. Procédé selon la revendication 3, dans lequel la mise en correspondance comprend l'étape consistant à :
mettre en correspondance (350) le premier utilisateur et le deuxième utilisateur d'après la valeur calculée.

5. Procédé selon la revendication 3, dans lequel la mise en correspondance comprend également l'étape consistant à :
déterminer si la valeur calculée vérifiée une condition prédéfinie et mettre en correspondance le premier utilisateur et le deuxième utilisateur lorsque la condition prédéterminée est vérifiée.

6. Procédé selon la revendication 5, dans lequel la condition prédéfinie est vérifiée lorsque la valeur calculée dépasse une valeur de seuil prédéfinie définie par le premier utilisateur et récupérée dans les données de profil.

7. Procédé selon l'une quelconque des revendications 2 à 6, dans lequel les données de profil du premier utilisateur contiennent des données d'étiquette pour le premier utilisateur, les données d'étiquette correspondant aux étiquettes entrées par la pluralité d'utilisateurs.

8. Procédé selon l'une quelconque des revendications 1 à 6, comprenant également l'étape consistant à :
regrouper les données d'étiquette dans une ou plusieurs catégories d'étiquette, l'évaluation des données d'étiquette comprenant l'évaluation des données d'étiquette d'une ou plusieurs des catégories d'étiquette.

9. Procédé selon la revendication 8, dans lequel lesdites une ou plusieurs catégories d'étiquette comprennent chacune une ou plusieurs données d'étiquette représentant chacune une étiquette, les étiquettes représentées dans la catégorie d'étiquette définissant une certaine caractéristique d'utilisateur.

**10.** Procédé selon l'une quelconque des revendications 1 à 6, dans lequel l'évaluation des données d'étiquette comprend les étapes consistant à :

déterminer un nombre de fois où une étiquette a été entrée pour le deuxième utilisateur ; et comparer le nombre de fois à un seuil prédéfini pour déterminer si l'étiquette est statistiquement précise.

**11.** Procédé selon l'une quelconque des revendications 1 à 6, comprenant également les étapes consistant à :

recevoir une étiquette concernant le premier utilisateur ou le deuxième utilisateur durant la session multi-utilisateur, l'étiquette étant entrée par le premier utilisateur, le deuxième utilisateur ou un autre utilisateur de la pluralité d'utilisateurs ; générer des données d'étiquette correspondant à l'étiquette, les données d'étiquette comprenant au moins l'étiquette et l'identité de l'utilisateur qui a entré l'étiquette ; et stocker les données d'étiquette.

**12.** Procédé selon l'une quelconque des revendications 1 à 6, comprenant également les étapes consistant à :

récupérer des données d'étiquette pour un troisième utilisateur, les données d'étiquette comprenant des étiquettes entrées par un ou plusieurs utilisateurs d'une pluralité d'utilisateurs comprenant le premier utilisateur et le deuxième utilisateur ; évaluer les données d'étiquette pour le troisième utilisateur ; mettre en correspondance le premier utilisateur avec le troisième utilisateur d'après le résultat de l'évaluation ; et ajouter le troisième utilisateur à la session multi-utilisateur.

**13.** Procédé selon l'une quelconque des revendications 1 à 12, dans lequel : l'évaluation des données d'étiquette comprend les étapes consistant à :

déterminer un type de chacune des étiquettes qui ont été entrées ; et déterminer un nombre de chaque type d'étiquette qui a été entré ; et la mise en correspondance comprenant une mise en correspondance basée sur le nombre de chaque type d'étiquette qui a été entré.

**14.** Logiciel informatique qui, lorsqu'il est exécuté par un ordinateur, est capable de mettre en œuvre un procédé selon l'une quelconque des revendications 1 à 13.

110 — Establish Multi-user Session

120 — Receive Tag Data

130 — Evaluate Tag Data

140 — Match User with Other Users

100

FIG. 1

FIG. 2

300

310 — Retrieve User Profile Data

320 — Retrieve Tag Data

330 — Calculate Value

340 — Condition Satisfied?

350 — Match User

360 — Next User?

N

Y

FIG. 3

EP 2 438 524 B1

FIG. 4

| P1 |
|---|
| $T_A(3)$ |
| $T_B(5)$ |
| $T_C(6)$ |

| P2 |
|---|
| $T_E(3)$ |
| $T_G(2)$ |

| P3 |
|---|
| $T_A(2)$ |
| $T_C(5)$ |
| $T_D(7)$ |

| P4 |
|---|
| $T_A(3)$ |

| P5 |
|---|
| |

| P6 |
|---|
| $T_F(3)$ |

| P7 |
|---|
| $T_A(3)$ |
| $T_C(6)$ |

| P8 |
|---|
| $T_G(12)$ |

| P9 |
|---|
| $T_A(7)$ |
| $T_H(10)$ |

| P10 |
|---|
| $T_F(4)$ |
| $T_H(5)$ |

| P11 |
|---|
| |

| P12 |
|---|
| |

| P13 |
|---|
| $T_C(3)$ |
| $T_H(6)$ |

FIG. 5

FIG. 6

EP 2 438 524 B1

700

710 — Receive Tag

↓

720 — Generate Tag Data

↓

730 — Store Generated Tag Data

FIG. 7

800

| User Input Device 810 | CPU 820 | GPU 830 |

| RAM 840 | Mass Storage 850 | User Interface 860 |

870

FIG. 8

FIG. 9

EP 2 438 524 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1570887 A1

**Non-patent literature cited in the description**

- Recommender System for Online Dating Service. **LUKAS BROZOVSKY et al.** Olin Library. Cornell University, March 2007, vol. 201